# EUROPEAN PATENT SPECIFICATION

(11) **EP 4 224 025 B1**
(45) Date of publication and mention of the grant of the patent: **25.03.2026**
(21) Application number: 21875416.6
(22) Date of filing: 24.09.2021
(51) Int. Cl.: F16C 17/24, F16C 41/00, F16N 29/00, F16N 29/04, G01M 13/04, G06N 20/00, G01M 13/045, G01H 1/00

(54) **MACHINE LEARNING DEVICE, SLIDE SURFACE DIAGNOSIS DEVICE, INFERENCE DEVICE, MACHINE LEARNING METHOD, MACHINE LEARNING PROGRAM, SLIDE SURFACE DIAGNOSIS METHOD, SLIDE SURFACE DIAGNOSIS PROGRAM, INFERENCE METHOD, AND INFERENCE PROGRAM**
MASCHINENLERNVORRICHTUNG, GLEITOBERFLÄCHENDIAGNOSEVORRICHTUNG, INFERENZVORRICHTUNG, MASCHINENLERNVERFAHREN, GLEITOBERFLÄCHENDIAGNOSEVERFAHREN, GLEITOBERFLÄCHENDIAGNOSEPROGRAMM, INFERENZVERFAHREN UND INFERENZPROGRAMM
DISPOSITIF D'APPRENTISSAGE AUTOMATIQUE, DISPOSITIF DE DIAGNOSTIC DE SURFACE DE COULISSEMENT, DISPOSITIF D'INFÉRENCE, PROCÉDÉ D'APPRENTISSAGE AUTOMATIQUE, PROGRAMME D'APPRENTISSAGE AUTOMATIQUE, PROCÉDÉ DE DIAGNOSTIC DE SURFACE DE COULISSEMENT, PROGRAMME DE DIAGNOSTIC DE SURFACE DE COULISSEMENT, PROCÉDÉ D'INFÉRENCE, ET PROGRAMME D'INFÉRENCE

(30) Priority: 30.09.2020 JP 2020164735
(43) Date of publication of application: 09.08.2023
(73) Proprietor: EBARA CORPORATION, Ota-ku, Tokyo 144-8510 (JP); University of Fukui, Fukui-shi, Fukui 910-8507 (JP)
(72) Inventor: TAKATOH, Chikako, Tokyo 144-8510 (JP); NAKAMURA, Yumiko, Tokyo 144-8510 (JP); SUGIYAMA, Kazuhiko, Tokyo 144-8510 (JP); HONDA, Tomomi, Fukui-shi, Fukui 910-8507 (JP)
(74) Representative: Carstens, Dirk Wilhelm
(86) International application number: PCT/JP2021/035082
(87) International publication number: WO 2022/071114

(56) References cited:
- CN-A- 111 458 142
- JP-A- 2007 292 731
- JP-B2- S5 913 692
- JP-Y2- S5 741 740

## Description

### Technical Field

The present invention relates to a sliding-surface diagnosis apparatus, a machine learning method, and a machine learning program.

### Background Art

A sliding mechanical element having a sliding surface has been conventionally used as one of many mechanical elements that constitute mechanical equipment. The sliding mechanical element includes a fixed-side sliding member and a rotation-side sliding member, and relative movement of these members is achieved by a sliding movement of sliding surfaces of both members. Therefore, a condition of the sliding surfaces greatly affects a function of the sliding mechanical element. From a viewpoint of maintenance of mechanical equipment, it is extremely important to diagnose the condition of the sliding surfaces and manage them in an appropriate condition.

For example, JP 2010-180982 A and JP H10-318261 A disclose apparatus for diagnosing a condition of a sliding surface of a sliding mechanical element. JP 2010-180982 A discloses an apparatus that detects damage to a sliding portion by monitoring a physical quantity, such as pressure or temperature, of the sliding portion between a rotary shaft and a slide bearing. JP H10-318261 A discloses an elastic-wave sensor as a sliding-condition detecting means attached to a bearing device. A shortage trend of lubricating oil on sliding surfaces between a bush and a connecting pin is detected based on a change in vibration detected by the elastic-wave sensor.

CN 111 458 142 A discloses a sliding bearing fault diagnosis method based on a generative adversarial network and a convolutional neural network. The method comprises the steps of: collecting vibration signals and bearing bush temperatures of a sliding bearing under no fault and different fault conditions, and carrying out preprocessing; carrying out ensemble average empirical mode decomposition on the vibration signals to obtain an optimal intrinsic mode function and a characteristic frequency corresponding to the optimal intrinsic mode function; constructing state matrixes on the basis of the bearing bush temperatures, and respectively inputting the state matrixes into the generative adversarial network according to categories to generate samples; carrying out edge expansion on the data of an initial sample set, and setting fault state labels; constructing a sliding bearing convolutional neural network model, and training the model by using the data set and the corresponding fault labels; and collecting data of the current sliding bearing, constructing a state matrix, inputting the state matrix into the trained neural network model, and carrying out fault diagnosis and prediction.

### Summary of Invention

### Technical Problem

The apparatuses disclosed in JP 2010-180982 A and JP H10-318261 A diagnose the condition of the sliding surface based on an individual physical quantity (e.g., pressure, temperature, and vibration). Therefore, when the change in the condition of the sliding surface causes a change in a physical quantity other than the above physical quantities or causes a change in a plurality of physical quantities in combination, the apparatuses disclosed in JP 2010-180982 A and JP H10-318261 A cannot diagnose it. In addition, diagnosis involving complex phenomena based on multiple physical quantities depends largely on experience of an operator (including tacit knowledge), and there are large individual differences between operators. Therefore, there has been a strong demand for automatic diagnosis.

In view of the above-described problem, the present invention provides a sliding-surface diagnosis apparatus, a machine learning method, and a machine learning program that can achieve highly accurate diagnosis of a condition of a sliding surface of a sliding mechanical element without depending on an experience of an operator.

### Solution to Problem

In order to achieve the above object, the present invention provides a sliding-surface diagnosis apparatus for diagnosing a condition of sliding surfaces of a fixed-side sliding member and a rotation-side sliding member using a learning model generated by a machine learning apparatus, as set forth in claim 1. Preferred embodiments of the sliding-surface diagnosis apparatus may be gathered from the dependent claims.

According to other aspects of the present invention, a machine learning method as set forth in claim 6 and a machine learning program as set forth in claim 7 is provided.

### Advantageous Effects of Invention

The sliding-surface diagnosis apparatus of the present invention can accurately diagnose the condition of the sliding surfaces without depending on an experience of an operator.

Problems, configurations, and effects other than the above will be will apparent in embodiments for carrying out the invention, which will be described later.

### Brief Description of Drawings

[FIG. 1] FIG. 1 is a schematic configuration diagram showing an example of a first sliding mechanical element 1A to which a sliding-surface diagnosis system 2 according to a first embodiment is applied;
[FIG. 2] FIG. 2 is a schematic configuration diagram showing an example of a second sliding mechanical element 1B to which the sliding-surface diagnosis system 2 according to the first embodiment is applied;
[FIG. 3] FIG. 3 is a hardware configuration diagram showing an example of a computer 200 that constitutes a machine learning apparatus 4 and a sliding-surface diagnosis apparatus 5;
[FIG. 4] FIG. 4 is a block diagram showing an example of the machine learning apparatus 4;
[FIG. 5] FIG. 5 is a data configuration diagram showing an example of data (supervised learning) used by the machine learning apparatus 4;
[FIG. 6] FIG. 6 is a schematic diagram showing an example of a neural network model used in the machine learning apparatus 4;
[FIG. 7] FIG. 7 is a flowchart showing an example of a machine learning method performed by the machine learning apparatus 4;
[FIG. 8] FIG. 8 is a block diagram showing an example of the sliding-surface diagnosis apparatus 5 according to the first embodiment;
[FIG. 9] FIG. 9 is a flow chart showing an example of a sliding-surface diagnosis method performed by the sliding-surface diagnosis apparatus 5;
[FIG. 10] FIG. 10 is a data configuration diagram showing an example of data (unsupervised learning) used in the machine learning apparatus 4;
[FIG. 11] FIG. 11 is a schematic diagram showing an example of an autoencoder model used in the machine learning apparatus 4;
[FIG. 12] FIG. 12 is a flow chart showing an example of a machine learning method performed by the machine learning apparatus 4; and
[FIG. 13] FIG. 13 is a flow chart showing an example of a sliding-surface diagnosis method performed by the sliding-surface diagnosis apparatus 5 according to the second embodiment.

### Description of Embodiments

Embodiments for carrying out the present invention will be described below with reference to the drawings. In the following descriptions, scope necessary for the descriptions to achieve the object of the present invention will be schematically shown, scope necessary for the descriptions of relevant parts of the present invention will be mainly described, and parts omitted from the descriptions will be based on known technology.

### (First embodiment)

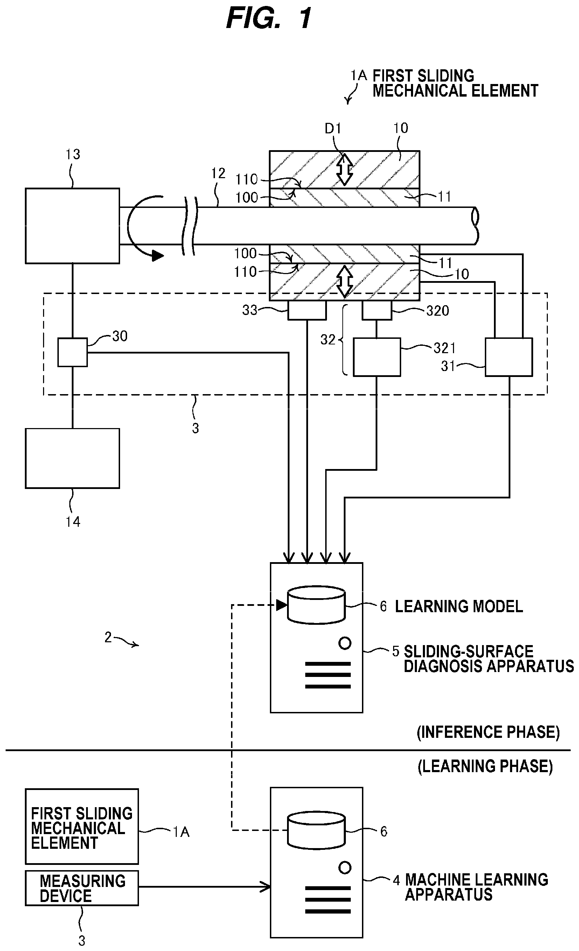

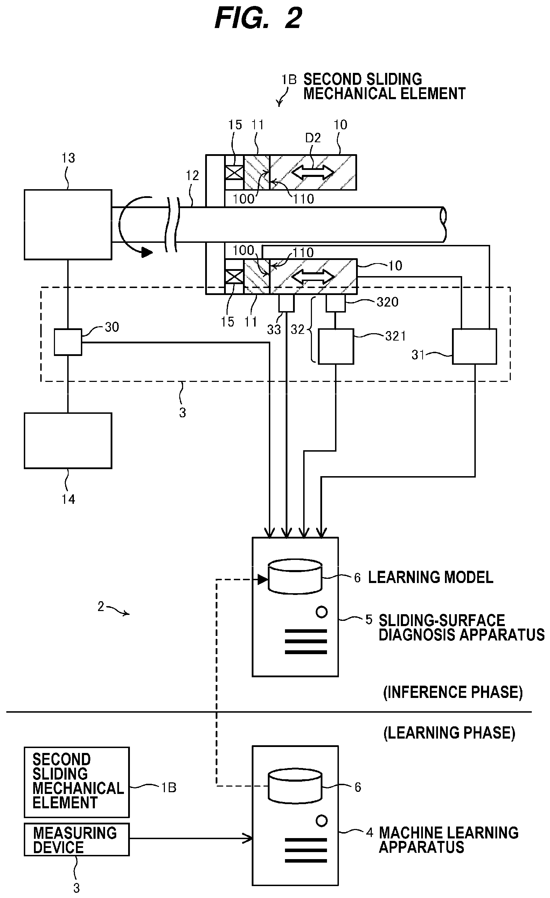

FIG. 1 is a schematic configuration diagram showing an example of a first sliding mechanical element 1A to which a sliding-surface diagnosis system 2 according to a first embodiment is applied. FIG. 2 is a schematic configuration diagram showing an example of a second sliding mechanical element 1B to which the sliding-surface diagnosis system 2 according to the first embodiment is applied.

The sliding mechanical elements 1A and 1B are composed of the first sliding mechanical element 1A (see FIG. 1) in which sliding surfaces 100 and 110 are in line contact, and the second sliding mechanical element 1B (see FIG. 2) in which sliding surfaces 100 and 110 are in surface contact.

Each of the first and second sliding mechanical elements 1A and 1B includes a fixed-side sliding member 10 having a fixed-side sliding surface 100 and a rotation-side sliding member 11 having a rotation-side sliding surface 110. In this specification, the term "sliding surface" is used as a term that represents not only both the fixed-side sliding surface 100 and the rotation-side sliding surface 110, but also either one of them.

The fixed-side sliding member 10 is fixed to a support member (not shown). The rotation-side sliding member 11 is fixed to a rotation shaft 12, and the rotation shaft 12 is coupled to a motor 13 as a driving source. The rotation-side sliding member 11 is rotated together with the rotation shaft 12 when current is supplied from a motor control device 14 to the motor 13 to cause the motor 13 to rotate. At this time, the fixed-side sliding surface 100 and the rotation-side sliding surface 110 slide in the presence of lubricant therebetween. The lubricant can be any substance, such as oil, water, aqueous solution, or the like.

As shown in FIG. 1, the first sliding mechanical element 1A has sliding surfaces 100 and 110 which are in line contact, and constitutes, for example, a sliding bearing that receives a radial load. In the first sliding mechanical element 1A, the fixed-side sliding member 10 and the rotation-side sliding member 11 have an annular shape and arranged concentrically around the rotation shaft 12. The rotation-side sliding member 11 is fixed to the rotation shaft 12 so as to cover an outer peripheral surface of the rotation shaft 12. An outer peripheral surface of the rotation-side sliding member 11 corresponds to the rotation-side sliding surface 110. The rotation-side sliding member 11 and the rotation shaft 12 may not be individual elements, and the rotation shaft 12 itself may serve as the rotation-side sliding member 11. In that case, the outer peripheral surface of the rotation shaft 12 corresponds to the rotation-side sliding surface 110. The fixed-side sliding member 10 is arranged so as to cover the rotation-side sliding surface 110. An inner peripheral surface of the fixed-side sliding member 10 corresponds to the fixed-side sliding surface 100.

As shown in FIG. 2, the second sliding mechanical element 1B has sliding surfaces 100 and 110 which are in surface contact, and constitutes, for example, a slide bearing or a mechanical seal that receives a thrust load. In the second sliding mechanical element 1B, the fixed-side sliding member 10 and the rotation-side sliding member 11 have an annular shape and are arranged side by side coaxially with the rotation shaft 12. A donut-shaped side surface of the fixed-side sliding member 10 located at the rotation-side sliding member 11 side corresponds to the fixed-side sliding surface 100. The rotation-side sliding member 11 is fixed to the outer peripheral surface of the rotation shaft 12. A donut-shaped side surface of the rotation-side sliding member 11 located at the fixed-side sliding member 10 side corresponds to the rotation-side sliding surface 110. The fixed-side sliding member 10 and the rotation-side sliding member 11 are supported such that the fixed-side sliding surface 100 and the rotation-side sliding surface 110 are pressed in an axial direction of the rotation shaft 12 by biasing members 15. The biasing members 15 may be provided on the fixed-side sliding member 10 side, instead of or in addition to being provided on the rotation-side sliding member 11 side as shown in FIG. 2. The biasing members 15 may be omitted without being provided on the rotation-side sliding member 11 side as shown in FIG. 2.

The sliding-surface diagnosis system 2 is provided for diagnosing condition of the sliding surfaces 100 and 110 of the sliding mechanical elements 1A and 1B having the above configurations. The sliding-surface diagnosis system 2 includes a measuring device 3, a machine learning apparatus 4, and a sliding-surface diagnosis apparatus 5.

The measuring device 3 is installed at each portion of the sliding mechanical elements 1A and 1B, and measures physical quantities and condition quantities of each portion of the sliding mechanical elements 1A and 1B. The measuring device 3 is coupled to the machine learning apparatus 4 and used for measuring of learning data in a learning phase, and is coupled to the sliding-surface diagnosis apparatus 5 and used for measuring of diagnostic data in an inference phase. The measuring device 3 includes a motor current sensor 30, a contact electric resistance measuring circuit 31, an acoustic emission (hereinafter referred to as "AE") measuring circuit 32, and an acceleration sensor 33.

The motor current sensor 30 is attached to, for example, a power line that couples the motor 13 to the motor control device 14 and measures a motor current value supplied from the motor control device 14 to the motor 13. The motor current sensor 30 may be provided in the motor 13 or in the motor control device 14.

The contact electric resistance measuring circuit 31 is electrically coupled to the fixed-side sliding member 10 and the rotation-side sliding member 11 and applies a predetermined voltage to the fixed-side sliding member 10 and the rotation-side sliding member 11 to measure a contact electric resistance between the fixed-side sliding member 10 and the rotation-side sliding member 11. A measured value of the contact electric resistance may be a resistance value (0Ω) indicating a contact state when there is not sufficient lubricant between the fixed-side sliding member 10 and the rotation-side sliding member 11. When a sufficient amount of lubricant exists between the fixed-side sliding member 10 and the rotation-side sliding member 11, a resistance value (for example, on the order of 100 kΩ) indicating an insulating state is measured.

The AE measuring circuit 32 includes an AE sensor 320 fixed to the fixed-side sliding member 10, and a signal processing circuit 321 electrically coupled to the AE sensor 320. The AE sensor 320 detects an AE wave generated in the fixed-side sliding member 10 and outputs the AE wave as an AE signal. The signal processing circuit 321 has, for example, a preamplifier and a discriminator, and passes the AE signal, output by the AE sensor 320, through a predetermined filter to amplify the AE signal and measure the AE wave. The AE sensor 320 may be fixed to the rotation-side sliding member 11, instead of or in addition to the fixed-side sliding member 10. In the example shown in FIGS. 1 and 2, the AE sensor 320 is attached to the outer cylindrical surface of the fixed-side sliding member 10, while attachment position and attachment manner of the AE sensor 320 may be changed as appropriate. The AE sensor 320 may be attached, for example, to an axial end surface of the fixed-side sliding member 10, or may be attached to the fixed-side sliding member 10 via a member, such as an adapter or a casing.

The acceleration sensor 33 is fixed to the fixed-side sliding member 10 and measures acceleration generated in the fixed-side sliding member 10. The acceleration sensor 33 is, for example, a sensor that measures single-axis acceleration, and is fixed to the fixed-side sliding member 10 so as to measure the acceleration in a direction (indicated by arrows D1 and D2) perpendicular to the sliding surfaces 100 and 110. In the first sliding mechanical element 1A, the direction indicated by the arrow D1 (see FIG. 1) is a radial direction of the fixed-side sliding member 10 and a load direction of the rotation shaft 12. In the second sliding mechanical element 1B, the direction indicated by the arrow D2 (see FIG. 2) is an axial direction of the fixed-side sliding member 10, and is a direction in which the rotation-side sliding member 11 and the fixed-side sliding member 10 are pressed against each other. The acceleration sensor 33 may be fixed to the rotation-side sliding member 11, instead of or in addition to the fixed-side sliding member 10. In the example show in FIGS. 1 and 2, the acceleration sensor 33 is attached to the outer cylindrical surface of the fixed-side sliding member 10, while attachment position and attachment manner of the acceleration sensor 33 may be changed as appropriate. The acceleration sensor 33 may be attached, for example, to an axial end surface of the fixed-side sliding member 10, or may be attached to the fixed-side sliding member 10 via a member, such as an adapter or a casing.

The measuring device 3, for example, measures the physical quantity and the condition quantity of each part at a predetermined measuring cycle. The measuring device 3 is configured to be able to output the measured value at a measuring time to the machine learning apparatus 4 and the sliding-surface diagnosis apparatus 5 each time the measuring cycle elapses. Measuring cycles of the motor current sensor 30, the contact electric resistance measuring circuit 31, the AE measuring circuit 32, and the acceleration sensor 33, which constitute the measuring device 3, may be the same or different. The measuring device 3 may output a continuous measured value like an analog signal, instead of outputting a discrete measured value each time the measuring cycle elapses as described above.

The machine learning apparatus 4 operates as a main configuration in a learning phase and generates a learning model 6 by machine learning for use in diagnosing the condition of the sliding surfaces 100 and 110. The machine learning apparatus 4 can employ both "supervised learning" and "unsupervised learning" as a machine learning method. This embodiment employs "supervised learning", and the second embodiment, which will be described later, employs "unsupervised learning".

The sliding-surface diagnosis apparatus 5 operates as a main configuration in an inference phase, and uses the learning model 6, which is a learned model, generated by the machine learning apparatus 4 to diagnose the condition of the sliding surfaces 100 and 110 from the measured values measured by the measuring device 3. The learning model 6, which is a learned model, is provided from the machine learning apparatus 4 to the sliding-surface diagnosis apparatus 5 via any communication network, storage medium, or the like.

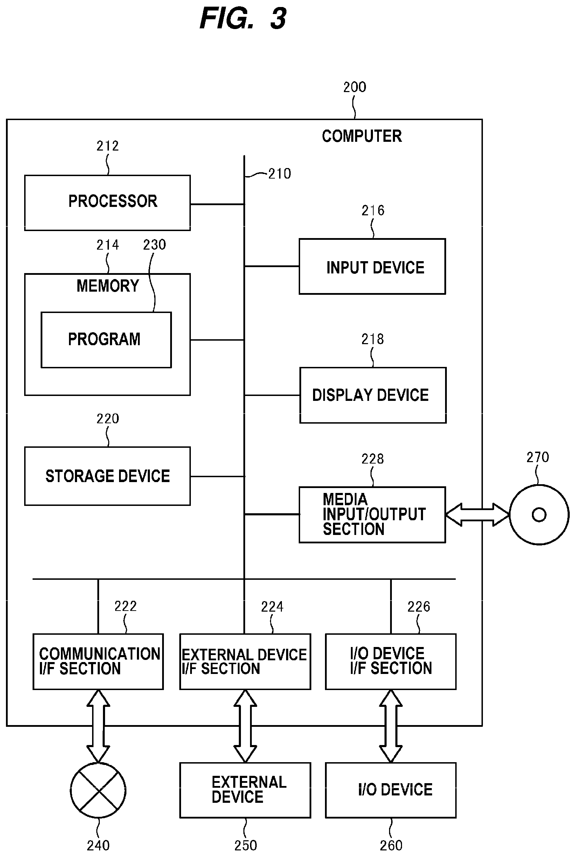

FIG. 3 is a hardware configuration diagram showing an example of a computer 200 that constitutes the machine learning apparatus 4 and the sliding-surface diagnosis apparatus 5.

Each of the machine learning apparatus 4 and the sliding-surface diagnosis apparatus 5 is constituted of the computer 200 which is a general-purpose computer or dedicated computer. As shown in FIG. 3, main components of the computer 200 include buses 210, a processor 212, a memory 214, an input device 216, a display device 218, a storage device 220, a communication I/F (interface) section 222, an external device I/F section 224, an I/O (input/output) device I/F section 226, and a media input/output section 228. The above components may be omitted as appropriate depending on an application in which the computer 200 is used.

The processor 212 is constituted of one or more arithmetic processing device(s) (CPU, MPU, GPU, DSP, etc.), and operates as a controller configured to control the entire computer 200. The memory 214 stores various data and programs 230, and is constituted of, for example, a volatile memory (DRAM, SRAM, etc.) functioning as a main memory and a non-volatile memory (ROM, flash memory, etc.).

The input device 216 is constituted of, for example, a keyboard, a mouse, a numeric keypad, an electronic pen, etc. The display device 218 is constituted of, for example, a liquid crystal display, an organic EL display, an electronic paper, a projector, etc. The input device 216 and the display device 218 may be configured integrally like a touch panel display. The storage device 220 is constituted of, for example, HDD, SSD, etc., and stores various data necessary for performing operating system and the programs 230.

The communication I/F section 222 is wired or wirelessly coupled to a network 240, such as the Internet or an intranet, and transmits and receives data to and from another computer according to a predetermined communication standard. The external device I/F section 224 is wired or wirelessly coupled to an external device 250, such as a printer or a scanner, and transmits and receives data to and from the external device 250 according to a predetermined communication standard. The I/O device I/F section 226 is coupled to I/O device 260, such as various sensors or actuators, and transmits and receives various signals, such as detection signals from the sensors or control signals to the actuators, and data to and from the I/O device 260. The media input/output section 228 is constituted of, for example, a drive device, such as a DVD drive or a CD drive, and writes and reads data into and from media 270, such as a DVD or a CD.

In the computer 200 having the above configurations, the processor 212 calls the programs 230 to a work memory area of the memory 214 and executes the programs 230, and controls each part of the computer 200 via the buses 210. The programs 230 may be stored in the storage device 220 instead of the memory 214. The programs 230 may be recorded in a non-transitory storage medium, such as a CD or a DVD, in installable file format or executable file format, and may be provided to the computer 200 via the media input/output section 228. The programs 230 may be provided to the computer 200 by downloading via the network 240 through the communication I/F section 222.

The computer 200 is, for example, a stationary computer or a portable computer, and is an electronic device in arbitrary form. The computer 200 may be a client computer, a server computer, or a cloud computer. The computer 200 may be applied to apparatus other than the machine-learning apparatus 4 and the sliding-surface diagnosis apparatus 5.

### (Machine learning device 4)

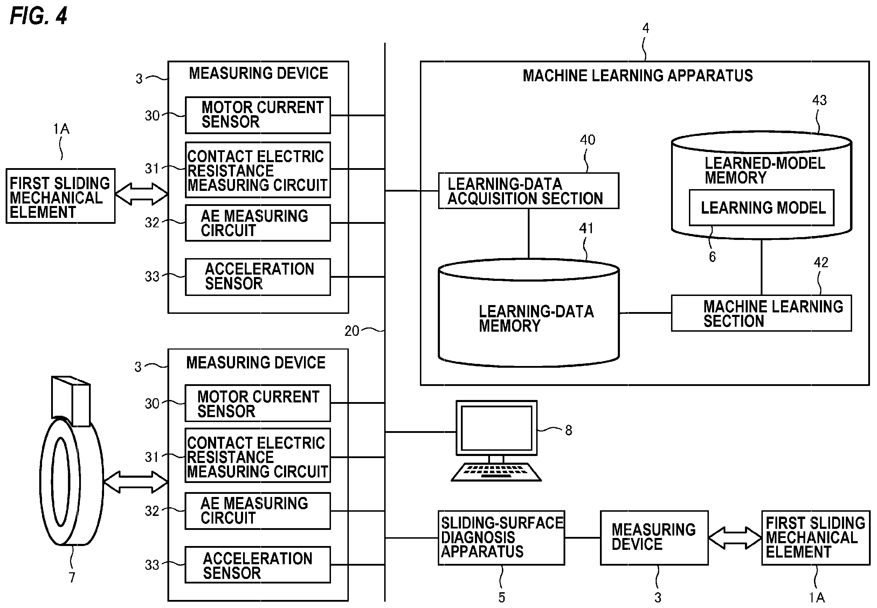

FIG. 4 is a block diagram showing an example of the machine learning apparatus 4. In the machine learning apparatus 4 shown in FIG. 4, the subject of the learning model 6 is the first sliding mechanical element 1A, but the subject of the learning model 6 may be the second sliding mechanical element 1B.

The machine-learning apparatus 4 includes a learning-data acquisition section 40, a learning-data memory 41, a machine-learning section 42, and a learned-model memory 43. The machine-learning apparatus 4 is constituted of, for example, the computer 200 shown in FIG. 2. In that case, the learning-data acquisition section 40 is constituted of the communication I/F section 222 or the I/O device I/F section 226. The machine-learning section 42 is constituted of the processor 212. The learning-data memory 41 and the learned-model memory 43 are constituted of the storage device 220.

The learning-data acquisition section 40 is an interface unit, which is coupled to various external devices via the communication network 20 and is configured to acquire learning data including at least input data. The external devices include, for example, the measuring device 3 mounted to the first sliding mechanical element 1A, the measuring device 3 mounted to a test device 7 simulating the first sliding mechanical element 1A, and an operator terminal 8 used by an operator. In the case where the sliding-surface diagnosis apparatus 5 is coupled to the communication network 20, the learning-data acquisition section 40 may acquire the learning data from the measuring device 3 mounted to the first sliding mechanical element 1A which is an object to be diagnosed by the sliding-surface diagnosis apparatus 5.

The motor current sensor 30, the contact electric resistance measuring circuit 31, the AE measuring circuit 32, and the acceleration sensor 33, which constitute the measuring device 3, are provided in parts of the test device 7. As shown in FIG. 4, in the case where the test device 7 is a device simulating the first sliding mechanical element 1A, the test device 7 is configured to perform, for example, a block-on-ring type unidirectional sliding friction test.

The learning-data memory 41 is a database configured to store one or plural sets of learning data acquired by the learning-data acquisition section 40. Specific configurations of the database that constitutes the learning-data memory 41 may be appropriately designed.

The machine-learning section 42 performs machine learning using the learning data stored in the learning-data memory 41. Specifically, the machine-learning section 42 inputs the plural sets of learning data into the learning model 6, and causes the learning model 6 to learn a correlation between the input data and diagnosis result of the sliding surfaces 100 and 110 included in the learning data, thereby generating the learning model 6 as a learned model. In this embodiment, a neural network is adopted as a specific method of the supervised learning performed by the machine learning section 42, which will be described below.

The learned-model memory 43 is a database configured to store the learning model 6 which is a learned model generated by the machine-learning section 42. The learning model 6 as a learned model stored in the learned-model memory 43 is provided to a real system (e.g., the sliding-surface diagnosis apparatus 5) via arbitrary communication network, storage medium, etc. Although the learning-data memory 41 and the learned-model memory 43 are shown as individual memories in FIG. 4, they may be configured as a single memory.

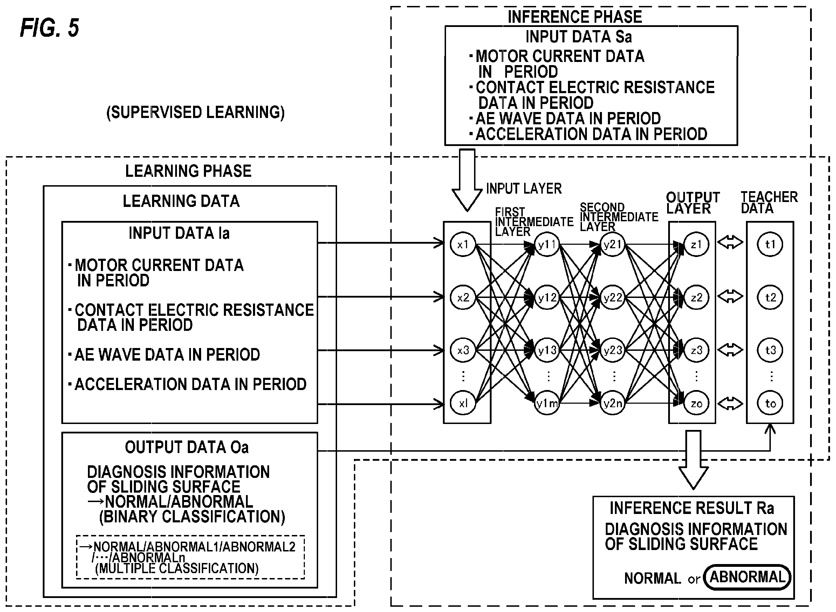

FIG. 5 is a data configuration diagram showing an example of data (supervised learning) used by the machine learning apparatus 4.

The learning data includes, as input data, at least data on the motor current value supplied to the motor 13 in a predetermined period, data on the contact electric resistance between the fixed-side sliding member 10 and the rotation-side sliding member 11 in a predetermined period, data on vibration generated in at least one of the fixed-side sliding member 10 and the rotation-side sliding member 11 in a predetermined period. The predetermined periods for the data on the motor current value, the data on the contact electric resistance, and the data on the vibration as the input data are basically the same period, but may be periods corresponding to time difference if there is a relationship in time difference between the data. The input data may further include data other than the data on the motor current value, the data on the contact electric resistance, and the data on the vibration. For example, the input data may further include data on at least one of sound generated when the fixed-side sliding member 10 and the rotation-side sliding member 11 are in sliding contact, temperature of at least one of the fixed-side sliding member 10 and the rotation-side sliding member 11, lubricating pressure between the fixed-side sliding member 10 and the rotation-side sliding member 11, flow rate of the lubricant, temperature of the lubricant, and property value (color, particle-size distribution) of the lubricant.

The data on the motor current value in the predetermined period includes a plurality of measured values (motor current values) measured by the motor current sensor 30 at a plurality of measurement points of time within the predetermined period. The data on the motor current value is, for example, associated with measurement times indicating the measurement points of time, and configured as time-series data arranged in chronological order according to the measurement times. If the motor current sensor 30 is configured to output continuous measured values, the learning-data acquisition section 40 converts the measured values into data in predetermined sampling cycles. As a result, the data on the motor current value in the predetermined period is composed of a plurality of measured values (motor current values) at a plurality of sampling points of time within the predetermined period.

The data on the contact electric resistance in the predetermined period is composed of a plurality of measured values (contact electric resistances) measured by the contact electric resistance measuring circuit 31 at a plurality of measurement points of time within the predetermined period. The data on the contact electric resistance is, for example, associated with measurement times indicating the measurement points of time, and configured as time-series data arranged in chronological order according to the measurement times. If the contact electric resistance measuring circuit 31 is configured to output continuous measured values, the learning-data acquisition section 40 converts the measured values into data in predetermined sampling cycles. As a result, the data on the contact electric resistance in the predetermined period is composed of a plurality of measured values (contact electric resistances) at a plurality of sampling points of time within the predetermined period.

The data on the vibration in the predetermined period includes at least one of data on the AE wave in the predetermined period and data on the acceleration generated in a direction perpendicular to the sliding surfaces 100 and 110 in the predetermined period. In the present embodiment, the data on the vibration includes the data on the AE wave and the data on the acceleration. The data on the vibration may be data other than the data on the AE wave and the data on the acceleration, as long as such data represents the vibration generated in at least one of the fixed-side sliding member 10 and the rotation-side sliding member 11.

The data on the AE wave in the predetermined period is composed of a plurality of measured values (AE waves) measured by the AE measuring circuit 32 at a plurality of measurement points of time in the predetermined period. The data on the AE wave is, for example, associated with measurement times indicating the measurement points of time, and configured as time-series data arranged in chronological order according to the measurement times. If the AE measuring circuit 32 is configured to output continuous measured values, the learning-data acquisition section 40 converts the measured values into data in predetermined sampling cycles. As a result, the data on the AE wave in the predetermined period is composed of a plurality of measured values (AE waves) at a plurality of sampling points of time within the predetermined period.

The data on the acceleration in the predetermined period is composed of a plurality of measured values (accelerations) measured by the acceleration sensor 33 at a plurality of measurement points of time within the predetermined period. The data on the acceleration is, for example, associated with measurement times indicating the measurement points of time, and configured as time-series data arranged in chronological order according to the measurement times. If the acceleration sensor 33 is configured to output continuous measured values, the learning-data acquisition section 40 converts the measured values into data in predetermined sampling cycles. As a result, the data on the acceleration in the predetermined period is composed of a plurality of measured values (accelerations) at a plurality of sampling points of time within the predetermined period.

When "supervised learning" is used as the machine learning, the learning data further includes output data associated with the input data. The output data contains diagnostic information indicating that the condition of the sliding surfaces 100 and 110 in the predetermined period is one of a plurality of conditions. The output data may be called teacher data or correct label in supervised learning.

The diagnostic information includes at least one of diagnostic information on wear of the sliding surfaces 100 and 110, diagnostic information on burned state of the sliding surfaces 100 and 110, and diagnostic information on contamination of the lubricant.

When the presence or absence of abnormality is diagnosed as the condition of the sliding surfaces 100 and 110, the diagnostic information is configured as information indicating whether the condition of the sliding surfaces 100 and 110 are normal or abnormal. In this case, the diagnostic information is classified into two values. For example, a value indicating that the sliding surfaces 100 and 110 are in a normal condition is defined as "0", and a value indicating that the sliding surfaces 100 and 110 are in an abnormal condition is defined as "1". In the present embodiment, the diagnostic information will be described as indicating either normality or abnormality.

Therefore, as shown in FIG. 5, the learning data includes the input data containing the data on the motor current value, the data on the contact electric resistance, the data on the AE wave, and the data on the acceleration, and further includes the output data containing the diagnostic information indicating either normality or abnormality. In this learning data, the input data is associated with the output data. Examples of the abnormality include not only post-abnormality that has occurred at a time of diagnosis, but also sign of abnormality which may occur in the future although it is judged to be normal within a permissible range at the time of diagnosis.

The information representing the abnormality among the diagnostic information includes, for example, a plurality of abnormalities corresponding to specific contents or degrees of the abnormality so as to correspond to abnormality 1 / abnormality 2 / .../ abnormality n shown in FIG. 5.

The specific contents of the abnormality include, for example, abnormality related to wear, abnormality related to burned state, and abnormality related to contamination of the lubricant. In this case, the diagnostic information is classified into multiple values (integers of 3 or more). For example, a value indicating that the sliding surfaces 100 and 110 are in a normal condition is defined as "0", a value indicating that there is an abnormality related to wear is defined as "1", and a value indicating that there is an abnormality related to burned state is defined as "2". Similarly, a value may be defined according to content of each abnormality.

The specific degrees of the abnormality include, for example, wear-related anomalies whose degrees of wear are represented by a plurality of levels. In this case, the diagnostic information is classified into multiple values (integers of 3 or more). For example, a value indicating that the sliding surfaces 100 and 110 are in a normal condition is defined as "0", a value indicating that there is an abnormality related to a low level in degree of wear is defined as "1", and a value indicating that there is an abnormality related to an intermediate level in degree of wear is defined as "2". Similarly, a value may be defined according to degree of each abnormality.

The correlation between the input data (the data on the motor current value, the data on the contact electric resistance, the data on the AE wave, and the data on the acceleration in the predetermined period) included in the learning data and the diagnostic information of the sliding surfaces 100 and 110 will be described below.

The motor current value is supplied from a motor control circuit 14 to the motor 13 when the motor 13 is rotated at a predetermined rotational speed, and therefore the motor current value changes depending on the condition of the sliding surfaces 100 and 110. For example, when coefficients of friction of the sliding surfaces 100 and 110 are high, the motor current value increases. Therefore, the data on the motor current value indirectly represents the frictional resistance of the sliding surfaces 100 and 110 and is mainly used to monitor the frictional resistance of the sliding surfaces 100 and 110. The contact electric resistance changes continuously depending on whether the fixed-side sliding member 10 and the rotation-side sliding member 11 are in an insulated state or in a contact state. Therefore, the data on the contact electric resistance is mainly used to monitor the lubricating state of the lubricant on the sliding surfaces 100 and 110.

In addition, if the lubricant is contaminated due to foreign matter mixed therein or due to an increase in wear particles as a result of wear of the sliding surfaces 100 and 110, the sliding surfaces 100 and 110 may suddenly vibrate, and such vibration is measured as changes in the acceleration and the AE wave. When the sliding surfaces 100 and 110 are damaged as a result of being burned, such damage is measured as the AE wave. Therefore, the data on the acceleration and the data on the AE wave are mainly used to monitor the contamination state of the lubricant on the sliding surfaces 100 and 110 and the burned state of the sliding surfaces 100 and 110.

The main monitoring application of each of the data on the motor current value, the data on the contact electric resistance, the data on the AE wave, and the data on the acceleration has been discussed above. On the other hand, the condition of the sliding surfaces 100 and 110 may change intricately under various influences, such as usage environment, usage conditions, or maintenance state of the sliding surfaces 100 and 110. It may be difficult to properly diagnose the condition of the sliding surfaces 100 and 110 when changing in such a complicated manner by just monitoring each data individually, and conventionally it largely relied on an experience of an operator. Thus, the learning data includes, as the input data, the data on the motor current value, the data on the contact electric resistance, the data on the AE wave, and the data on the acceleration in a predetermined period of time. The learning data including such various data makes it possible to accurately diagnose the condition of the sliding surfaces 100 and 110 even when the condition of the sliding surfaces 100 and 110 change intricately under various influences as described above.

The learning-data acquisition section 40 obtains the above-described learning data as follows. The learning-data acquisition section 40 obtains the input data from the measuring device 3. The input data obtained includes the data on the motor current value, the data on the contact electric resistance, the data on the AE wave, and the data on the acceleration in a predetermined period measured by the measuring device 3 provided in the first sliding mechanical element 1A or the test device 7. In addition, an operator diagnoses the condition of the sliding surfaces 100 and 110 in the predetermined period in which the input data is measured by the measuring device 3, and inputs the diagnosis result (for example, normal or abnormal) to the operator terminal 8. The learning-data acquisition section 40 acquires, from the operator terminal 8, diagnostic information containing the diagnostic result as the output data (teacher data). Then, the learning-data acquisition section 40 produces one learning data by associating the input data with the output data, and stores the one learning data in the learning-data memory 41.

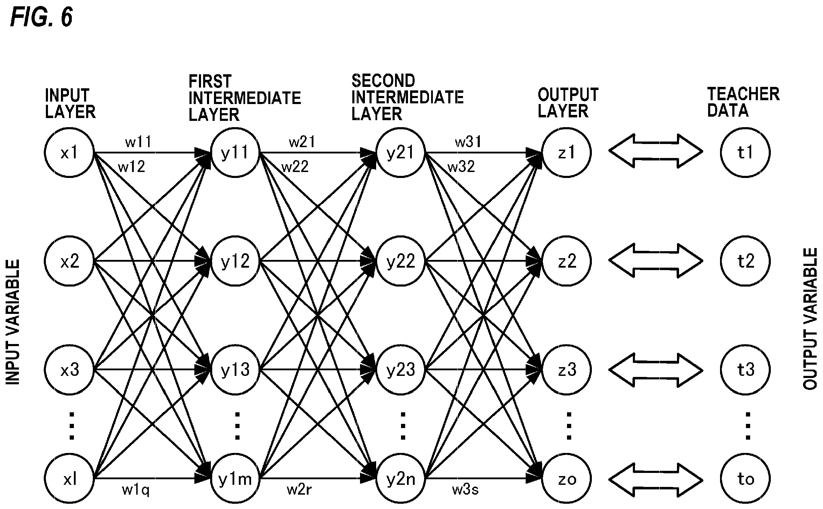

FIG. 6 is a schematic diagram showing an example of a neural network model used in the machine learning apparatus 4.

The learning model 6 is constructed as a neural network model shown in FIG. 6. The neural network model includes 1 number of neurons (x1 to xl) in an input layer, m number of neurons (y11 to y1m) in a first intermediate layer, and n number of neurons (y21 to y2n) in a second intermediate layer, and o number of neurons (z1 to zo) in an output layer.

Each neuron in the input layer is associated with each data of the input data included in the learning data. Each neuron in the output layer is associated with each data of the output data included in the learning data. The input data before being input to the input layer may be subjected to predetermined preprocessing, and the output data that has been output from the output layer may be subjected to predetermined postprocessing.

The first intermediate layer and the second intermediate layer may be called hidden layers. The neural network may further include a plurality of hidden layers in addition to the first intermediate layer and the second intermediate layer, or may include only the first intermediate layer as a hidden layer. Synapses connecting the neurons of the layers extend between the input layer and the first intermediate layer, between the first intermediate layer and the second intermediate layer, and between the second intermediate layer and the output layer. Each synapse is associated with a weight wi (i is a natural number).

The neural network model uses the learning data to input the input data included in the learning data to the input layer, output the output data as an inference result from the output layer, and compare the output data as the inference result with the output data (teaching data) included in the learning data to learn a correlation between the input data and the output data.

Specifically, each input data included in the learning data is input to each neuron of the input layer. A value of each neuron in the output layer is determined by calculating the sum of a sequence of the products of values of input-side neurons coupled to the neuron of the output layer and the weights wi associated with the synapses connecting output-side neurons and the input-side neurons. The calculation is performed for all neurons other than the input layer.

The values (z1 to zo) output to the respective neurons in the output layer as the inference result are compared with values (t1 to to) of the teacher data corresponding to the output data included in the learning data, so that an error is determined. A process (backpropagation) is performed to adjust the weight wi associated with each synapse so as to reduce the error.

When a predetermined learning end condition is satisfied (e.g., when the above series of processes are repeated predetermined times, or when the error is smaller than an allowable value), the machine learning is terminated, and the learned neural network model (all weights wi associated with the synapses) is generated.

### (Machine learning method)

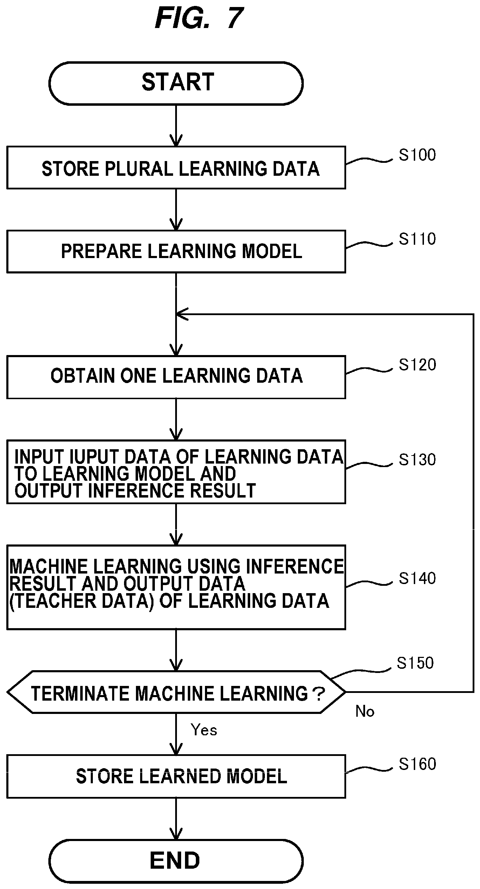

FIG. 7 is a flowchart showing an example of the machine learning method performed by the machine learning apparatus 4. The machine learning method corresponds to the learning phase in FIG. 5.

First, in step S100, the learning-data acquisition section 40 prepares a desired number of learning data as a preliminary preparation for starting the machine learning, and stores the prepared learning data in the learning-data memory 41. The number of learning data to be prepared may be set in consideration of the inference accuracy required for the finally obtained learning model 6.

Several methods can be adopted as methods of preparing the learning data. For example, when an abnormality has occurred in the sliding surfaces 100 and 110 of the specific first sliding mechanical element 1A or the test device 7, or when an operator recognized a sign of abnormality, various types of measured values are obtained using the measuring device 3 during a period of time before and after such phenomena has occurred, and the operator inputs, using the operator terminal 8, a diagnosis result associated with the measured values, so that the input data and the output data (for example, the value of the output data in this case is "1") constituting the learning data are prepared. Such operations are repeated, so that plural sets of learning data can be prepared. In another method, for example, the learning data may be acquired by intentionally causing an abnormal state in the sliding surfaces 100 and 110 of the first sliding mechanical element 1A or the test device 7. Furthermore, the learning data include not only input data and output data obtained when an abnormality has occurred, but also input data and output data obtained when no abnormality has occurred. Specifically, plural sets of learning data including input data and output data (for example, the value of the output data in this case is "0") obtained when the sliding surfaces 100 and 110 of the first sliding mechanical element 1A or the test device 7 are in a normal condition are prepared.

Next, in step S110, the machine learning section 42 prepares the learning model 6 which has not learned yet so as to start the machine learning. The learning model 6 prepared before learning is composed of the neural network model illustrated in FIG. 6, and the weight of each synapse is set to an initial value. The neurons in the input layer are associated with the data on the motor current value, the data on the contact electric resistance, the data on the AE wave, and the data on the acceleration as the input data included in the learning data. The neurons in the output layer are associated with the diagnostic information as the output data included in the learning data.

Next, in step S120, the machine learning section 42 acquires one learning data from the plural sets of learning data stored in the learning-data memory 41. For example, the machine learning section 42 may randomly acquire one learning data.

Next, in step S130, the machine learning section 42 inputs the input data included in the one learning data to the input layer of the prepared learning model 6 which has not learned yet (or in the process of learning). As a result, output data is output as an inference result from the output layer of the learning model 6. However, this output data is generated by the learning model 6 which has not learned yet (or in the process of learning). Therefore, the output data as the inference result output from the learning model 6 indicates information different from the output data (teacher data) included in the learning data.

Next, in step S140, the machine learning section 42 compares the output data (teacher data) included in the one learning data acquired in the step S120 with the output data as the inference result output from the output layer in the step S130, and adjusts the weight of each synapse to perform the machine learning. In this way, the machine learning section 42 causes the learning model 6 to learn the correlation between the input data and the output data (diagnostic information of the sliding surfaces 100 and 110).

For example, the diagnostic information that constitutes the teacher data is defined as binary classification in which a normal condition is represented by "0" and an abnormal condition is represented by "1". In that case, the value of the output data included in the one learning data selected in the step S120 is "1", while the value of the output data output from the output layer may be a predetermined value between 0 and 1, such as "0.63". In this case, in the step S140, the weight associated with each synapse of the learning model 6 in the process of learning is adjusted such that, when similar input data is input to the input layer of the learning model 6 in the process of learning, the value output from the output layer approaches "1".

Next, in step S150, the machine learning section 42 determines whether or not it is necessary to continue the machine learning based on, for example, an error between the output data and the teacher data, or the remaining number of learning data which have not yet been used for learning stored in the learning-data memory 41.

In step S150, if the machine learning section 42 determines to continue the machine learning (No in the step S150), the process is returned to the step S120, and the steps S120 to S140 are performed multiple times on the learning model 6 in the process of learning with use of the learning data which have not yet been used for learning. On the other hand, if the machine learning section 42 determines to terminate the machine learning in the step S150 (Yes in the step S150), the process proceeds to step S160.

Then, in step S160, the machine learning section 42 stores, in the learned-model memory 43, the learning model 6 as a learned model generated by adjusting the weights associated with the respective synapses, and terminates the machine learning method shown in FIG. 7. In the machine learning method, the step S100 corresponds to a learning-data storing process, the steps S110 to S150 correspond to a machine learning process, and the step S160 corresponds to a learned-model storing process.

As described above, the machine learning apparatus 4 and the machine learning method according to the present embodiment can provide the learning model 6 capable of inferring (estimating) diagnostic information of the sliding surfaces 100 and 110 with high accuracy based on the data on the motor current value, the data on the contact electric resistance, and the data on the vibration (AE wave and acceleration in this embodiment).

### (Sliding surface diagnosis device 5)

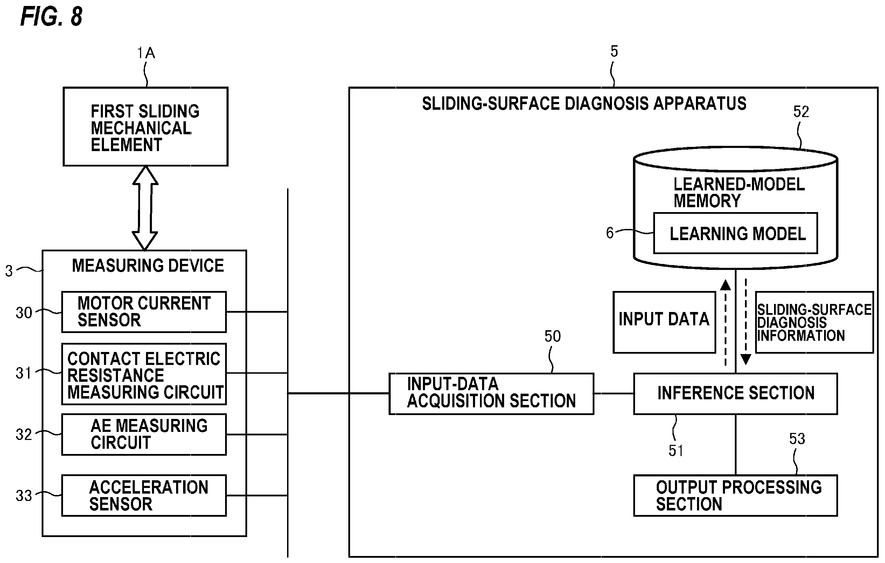

FIG. 8 is a block diagram showing an example of the sliding-surface diagnosis apparatus 5 according to the first embodiment. In the sliding-surface diagnosis apparatus 5 shown in FIG. 8, the subject of the learning model 6 is the first sliding mechanical element 1A, but the subject of the learning model 6 may be the second sliding mechanical element 1B.

The sliding-surface diagnosis apparatus 5 includes an input-data acquisition section 50, an inference section 51, a learned-model memory 52, and an output processing section 53. The sliding-surface diagnosis apparatus 5 is composed of, for example, the computer 200 shown in FIG. 3. In that case, the input-data acquisition section 50 is constituted of the communication I/F section 222 or the I/O device I/F section 226, the inference section 51 and the output processing section 53 are constituted of the processor 212, and the learned-model memory 52 is constituted of the storage device 220. The sliding-surface diagnosis apparatus 5 may be incorporated in the motor control device 14, or may be incorporated in a management device superior to the motor control device 14 (for example, a controller for a machine facility, a facility management system that manages a plurality of machine facilities, etc.).

The input-data acquisition section 50 is coupled to the measuring device 3 (the motor current sensor 30, the contact electric resistance measuring circuit 31, the AE measuring circuit 32, and the acceleration sensor 33) mounted to the first sliding mechanical element 1A. The input-data acquisition section 50 is an interface unit that acquires the input data (the data on the motor current value, the data on the contact electric resistance, the data on the AE wave, and the data on the acceleration in a predetermined period) based on measured values measured by the measuring device 3.

The inference section 51 inputs the input data acquired by the input-data acquisition section 50 to the learning model 6 and performs inference processing for inferring diagnostic information of the sliding surfaces 100 and 110. The inference processing uses the learning model 6 which is a learned model that has been subjected to the supervised learning performed by the machine learning apparatus 4 and the machine learning method.

The inference section 51 not only performs the inference processing using the learning model 6, but also includes a preprocessing function (preprocessing for the inference processing) that adjusts the input data acquired by the input-data acquisition section 50 to a desired format, etc. and inputs the input data to the learning model 6, and a post-processing function (post-processing for the inference processing) that applies a predetermined logical formula or calculation formula to the value of the output data output from the learning model 6 to finally determine the condition of the sliding surfaces 100 and 110. The inference result of the inference section 51 is preferably stored in the learned-model memory 52 or other storage device (not shown). Past inference results can be used as learning data for online learning or re-learning, for example, to further improve the inference accuracy of the learning model 6.

The learned-model memory 52 is a database that stores the learning model 6 as a learned model to be used in the inference processing of the inference section 51. The number of learning model 6 stored in the learned-model memory 52 is not limited to one. For example, a plurality of learning model models 6 for different numbers of input data or a plurality of learning model models 6 generated by different machine learning methods may be stored and selectively used.

The output processing section 53 performs output processing for outputting the inference result of the inference section 51, i.e., the diagnostic information of the sliding surfaces 100 and 110. Various means can be adopted as specific output means. The output processing section 53 may, for example, inform an operator of the diagnostic information by display or sound, or transmit the diagnostic information as a diagnostic history of the first sliding mechanical element 1A to the motor control device 14 or a management device (not shown) superior to the motor control device 14, so that the diagnostic information can be stored in a memory of the motor control device 14 or a memory of the management device for the motor control unit 14, or can be used for drive control of the motor 13.

### (Sliding-surface diagnosis method)

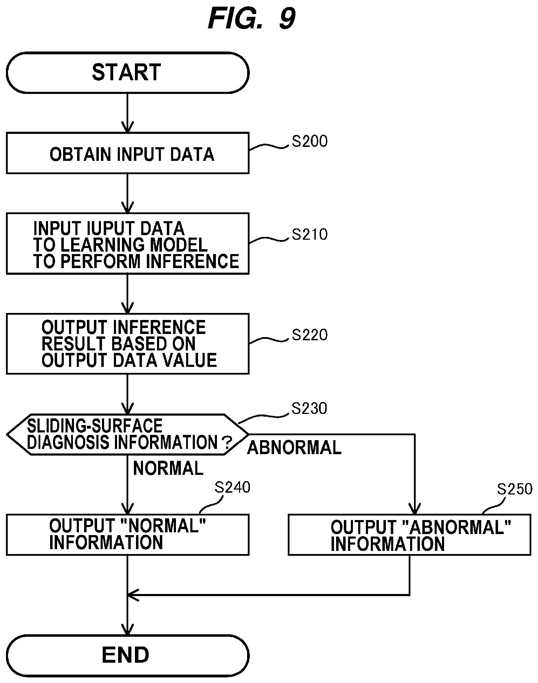

FIG. 9 is a flow chart showing an example of the sliding-surface diagnosis method performed by the sliding-surface diagnosis apparatus 5 according to the first embodiment. In FIG. 9, the diagnostic information of the sliding surfaces 100 and 110, which will be described below, is defined as binary classification representing either normal "0" or abnormal "1". The sliding-surface diagnosis method corresponds to the inference phase in FIG. 5.

The current is supplied from the motor control device 14 to the motor 13, and the motor 13 is rotated, so that the rotation-side sliding member 11 of the first sliding mechanical element 1A is rotated. At this time, a series of the sliding-surface diagnosis method shown in FIG. 9 is executed by the sliding-surface diagnosis apparatus 5 at a predetermined diagnosis timing. The diagnostic timing may be, for example, predetermined time intervals, or a time when a predetermined event occurs (at the time of an operator's operation instruction, at the time of maintenance operation, etc.).

First, in step S200, the input-data acquisition section 50 acquires the input data based on the measured values measured by the measuring device 3 (the motor current sensor 30, the contact electric resistance measuring circuit 31, the AE measuring circuit 32, and the acceleration sensor 33). The input data obtained include the data on the motor current value, the data on the contact electric resistance, the data on the AE wave, and the data on the acceleration in a predetermined period. At this time, the input data is required to include measured values measured by the measuring device 3 for the same period as the predetermined period or a longer period than the predetermined period.

Next, in step S210, the inference section 51 preprocesses the input data, inputs the input data to the input layer of the learning model 6, and obtains the output data output from the output layer of the learning model 6.

Next, in step S220, the inference section 51 performs post-processing of the supervised learning. For example, the inference section 51 compares a value (a numerical number between 0 and 1) of the output data with a predetermined threshold value, and if the value of the output data is less than the predetermined threshold value, the diagnostic information is determined to be "normal", and if the value of the output data is equal to or larger than the predetermined threshold value, the diagnostic information is determined to be "abnormal". The inference section 51 outputs the result of the determination as the inference result.

Next, in step S230, the output processing section 53 determines whether the diagnosis information of the sliding surfaces 100 and 110, which is the inference result of the inference section 51, indicates "normal" or "abnormal". If the output processing section 53 determines "normal", the process proceeds to step S240. If the output processing section 53 determines "abnormal", the process proceeds to step S250.

Then, in step S240, the output processing section 53 outputs information indicating "normal". The step S240 may be omitted.

In step S250, the output processing section 53 outputs information indicating "abnormal", and a series of the sliding-surface diagnosis method shown in FIG. 9 is terminated. In the sliding-surface diagnosis method, the step S200 corresponds to an input-data acquisition process, the steps S210 to S220 correspond to an inference process, and the steps S230 to S250 correspond to an output processing process.

As described above, according to the sliding-surface diagnosis apparatus 5 and the sliding-surface diagnosis method of the present embodiment, the condition of the sliding surfaces 100 and 110 can be diagnosed with high accuracy without depending on an experience of an operator.

### (Second embodiment)

In the first embodiment, "supervised learning" is used as the machine learning method. In second embodiment which will be discussed below, "unsupervised learning" is used. The basic configurations and operations of the measuring device 3, the machine learning apparatus 4, and the sliding-surface diagnosis apparatus 5 that constitute the sliding mechanical elements 1A and 1B and the sliding-surface diagnosis system 2 in the second embodiment are the same as those of the first embodiment. Therefore, differences from the first embodiment will be mainly described below.

### (Machine learning device 4)

As well as the first embodiment (see FIG. 4), the machine learning apparatus 4 includes learning-data acquisition section 40, learning-data memory 41, machine learning section 42, and learned-model memory 43.

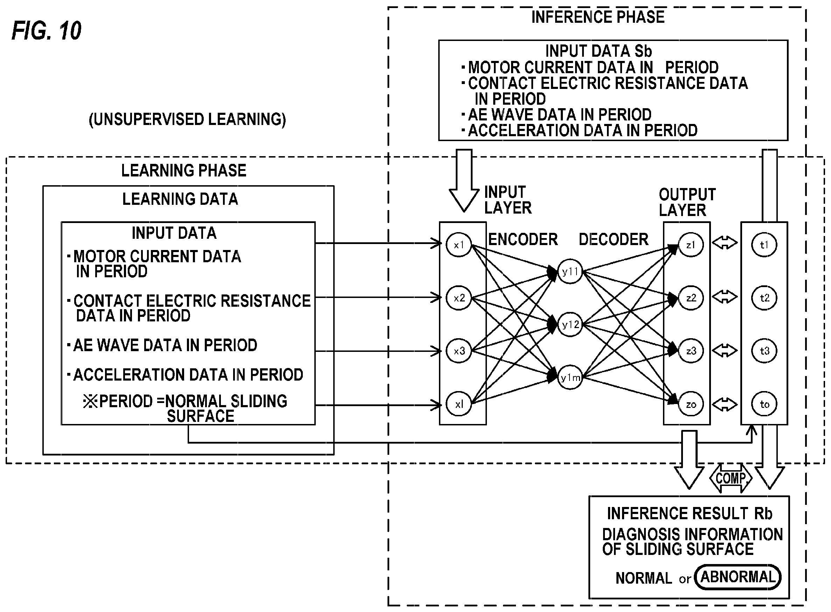

FIG. 10 is a data configuration diagram showing an example of data (unsupervised learning) used in the machine learning apparatus 4 according to the second embodiment.

When "unsupervised learning" is used as the machine learning, learning data includes only input data obtained in a predetermined period when the diagnostic information indicates that the condition of sliding surfaces 100 and 110 is a predetermined condition. Specifically, the learning data may not include output data, and presence or absence of output data and a format of the output data can be appropriately selected according to the machine learning method employed in the machine learning apparatus 4.

When the presence or absence of abnormality is diagnosed as the condition of the sliding surfaces 100 and 110, the diagnostic information is configured as information indicating whether the condition of the sliding surfaces 100 and 110 is normal or abnormal. In this case, as shown in FIG. 10, the learning data according to the present embodiment is composed only of the input data including data on the motor current value, data on the contact electric resistance, data on the AE wave, and data on the acceleration in a predetermined period when the condition of the sliding surfaces 100 and 110 is normal.

The learning-data acquisition section 40 obtains the above-described learning data as follows. The learning-data acquisition section 40 obtains the input data from the measuring device 3. The input data obtained includes the data on the motor current value, the data on the contact electric resistance, the data on the AE wave, and the data on the acceleration in a predetermined period measured by the measuring device 3 provided in the first sliding mechanical element 1A or the test device 7. In addition, an operator diagnoses the condition of the sliding surfaces 100 and 110 in the predetermined period in which the input data is measured by the measuring device 3, and inputs to the operator terminal 8 the diagnosis result indicating that the sliding surfaces 100 and 110 are in a normal condition. Then, the learning-data acquisition section 40 produces one learning data composed of only the input data, and stores the learning data in the learning-data memory 41.

The machine-learning section 42 inputs one or plural sets of learning data into the learning model 6, and causes the learning model 6 to learn a correlation between the input data and diagnosis result indicating that the sliding surfaces 100 and 110 are in a normal condition included in the learning data, thereby generating the learning model 6 as a learned model. In this embodiment, an autoencoder is adopted as a specific method of the unsupervised learning performed by the machine learning section 42, which will be described below.

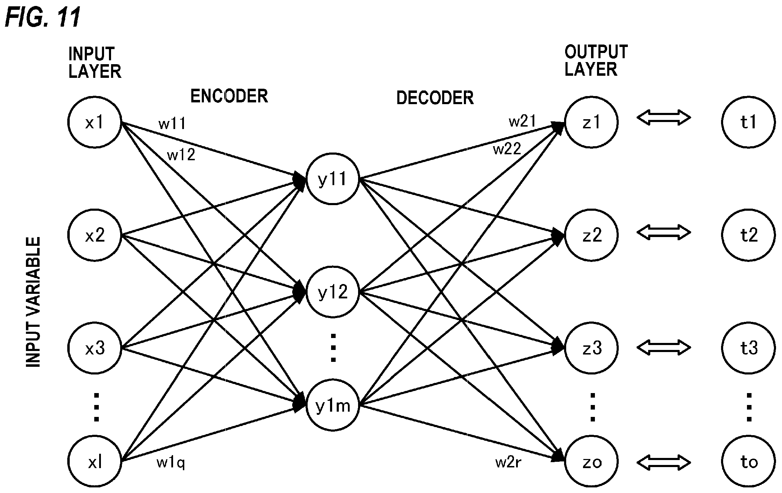

FIG. 11 is a schematic diagram showing an example of an autoencoder model used in the machine learning apparatus 4 according to the second embodiment.

The learning model 6 is configured as an autoencoder model shown in FIG. 10. The autoencoder model includes 1 number of neurons (x1 to xl) in an input layer, m number of neurons (y1 to ym) in an intermediate layer, and o number of neurons (z1 to zo) in an output layer. The number of neurons in the input layer and the number of neurons in the output layer are the same, and are greater than the number of neurons in the intermediate layer.

Each neuron in the input layer is associated with each data of the input data included in the learning data. The intermediate layer may be called a hidden layer, and the autoencoder model may have multiple hidden layers. Synapses connecting the neurons of the layers extend between the input layer and the intermediate layer, and between the intermediate layer and the output layer. The synapses are associated with weights wi (i is a natural number).

The autoencoder model uses the learning data to input the input data included in the learning data to the input layer, output the output data as an inference result from the output layer, compare the output data as the inference result with the input data included in the learning data, and adjust the weights wi to thereby learn a pattern and a trend of the input data.

When a predetermined learning end condition is satisfied (e.g., when the above series of processes are repeated predetermined times, or when the error is smaller than an allowable value), the machine learning is terminated, and the learned autoencoder model (all weights wi associated with the synapses) is generated.

### (Machine learning method)

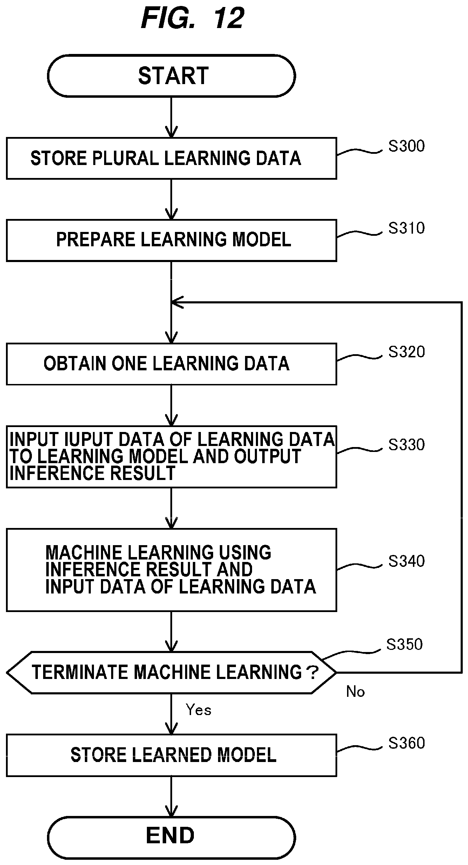

FIG. 12 is a flowchart showing an example of a machine learning method performed by the machine learning apparatus 4.

First, in step S300, the learning-data acquisition section 40 prepares a desired number of learning data as a preliminary preparation for starting the machine learning, and stores the prepared learning data in the learning-data memory 41.

Several methods can be adopted as methods of preparing the earning data. For example, various types of measured values are obtained using the measuring device 3 in a predetermined period when the sliding surfaces 100 and 110 of the specific sliding mechanical elements 1A and 1B or the test device 7 are in a normal condition, so that the input data that constitutes the learning data is prepared. Such operations are repeated, so that plural sets of learning data can be prepared.

Next, in step S310, the machine learning section 42 prepares the learning model 6 which has not learned yet so as to start the machine learning. The learning model 6 prepared before learning is composed of the autoencoder model illustrated in FIG. 11, and the weight of each synapse is set to an initial value. The neurons in the input layer are associated with the data on the motor current value, the data on the contact electric resistance, the data on the AE wave, and the data on the acceleration as the input data included in the learning data.

Next, in step S320, the machine learning section 42 acquires one learning data from the plural sets of learning data stored in the learning-data memory 41. For example, the machine learning section 42 may randomly acquire one learning data.

Next, in step S330, the machine learning section 42 inputs the input data included in the one learning data to the input layer of the prepared learning model 6 which has not learned yet (or in the process of learning). As a result, output data is output as an inference result from the output layer of the learning model 6. However, this output data is generated by the learning model 6 which has not learned yet (or in the process of learning). Therefore, the output data as the inference result output from the learning model 6 indicates information different from the input data included in the learning data.

Next, in step S340, the machine learning section 42 compares the input data included in the one learning data acquired in the step S320 with the output data as the inference result output from the output layer in the step S330, and adjusts the weight of each synapse to perform the machine learning.

Next, in step S350, the machine learning section 42 determines whether or not it is necessary to continue the machine learning. As a result, if the machine learning section 42 determines to continue the machine learning (No in step S350), the process is returned to the step S320, and the steps S320 to S340 are performed on the learning model 6 in the process of learning. If the machine learning section 42 determines to end the machine learning (Yes in step S350), the process proceeds to step S360.

Then, in step S360, the machine learning section 42 stores, in the learned-model memory 43, the learning model 6 as a learned model generated by adjusting the weights associated with the respective synapses, and terminates the machine learning method shown in FIG. 12. In the machine learning method, the step S300 corresponds to a learning-data storing process, the steps S310 to S350 correspond to a machine learning process, and the step S360 corresponds to a learned-model storing process.

As described above, the machine learning apparatus 4 and the machine learning method according to the present embodiment can provide the learning model 6 capable of inferring (estimating) diagnostic information of the sliding surfaces 100 and 110 with high accuracy based on the data on the motor current value, the data on the contact electric resistance, and the data on the vibration (AE wave and acceleration in this embodiment).

### (Sliding-surface diagnosis apparatus 5)

As well as the first embodiment (see FIG. 8), the sliding-surface diagnosis apparatus 5 includes input-data acquisition section 50, inference section 51, learned-model memory 52, and output processing section 53.

The inference section 51 inputs the input data acquired by the input-data acquisition section 50 to the learning model 6 and performs inference processing of inferring diagnostic information of the sliding surfaces 100 and 110. The inference processing uses the learning model 6 which is a learned model that has been subjected to the unsupervised learning performed by the machine learning apparatus 4 and the machine learning method.

### (Sliding-surface diagnosis method)

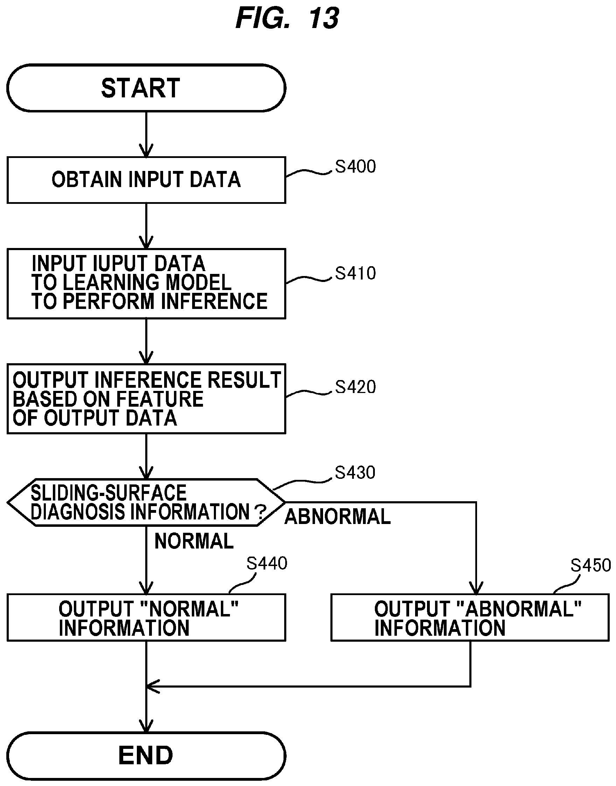

FIG. 13 is a flow chart showing an example of the sliding-surface diagnosis method performed by the sliding-surface diagnosis apparatus 5 according to the second embodiment. In FIG. 13, the diagnostic information of the sliding surfaces 100 and 110, which will be described below, is defined as binary classification representing either normal or abnormal.

First, in step S400, the input-data acquisition section 50 acquires the input data based on the measured values measured by the measuring device 3 (the motor current sensor 30, the contact electric resistance measuring circuit 31, the AE measuring circuit 32, and the acceleration sensor 33). The input data obtained include the data on the motor current value, the data on the contact electric resistance, the data on the AE wave, and the data on the acceleration in a predetermined period.

Next, in step S410, the inference section 51 preprocesses the input data, inputs the input data to the input layer of the learning model 6, and obtains the output data output from the output layer of the learning model 6.

Next, in step S420, the inference section 51 performs post-processing of the unsupervised learning. For example, the inference section 51 determines a difference between a feature based on the input data and a feature based on the output data. The feature is, for example, parameter(s) expressed as a feature vector in a multidimensional space, and the difference is expressed as a distance between feature vectors. The inference section 51 determines that the diagnostic information is "normal" if the difference is less than a predetermined threshold value, and determines that the diagnostic information is "abnormal" if the difference is larger than or equal to the predetermined threshold value. The inference section 51 outputs the result of the determination as the inference result.

Next, in step S430, the output processing section 53 determines whether the diagnosis information of the sliding surfaces 100 and 110, which is the inference result of the inference section 51, indicates "normal" or "abnormal". If the output processing section 53 determines "normal", the process proceeds to step S440. If the output processing section 53 determines "abnormal", the process proceeds to step S450 (which may be omitted), and a series of the sliding-surface diagnosis method shown in FIG. 13 is terminated. In the sliding-surface diagnosis method, the step S400 corresponds to an input-data acquisition process, the steps S410 to S420 correspond to an inference process, and the steps S430 to S450 correspond to an output processing process.

As described above, according to the sliding-surface diagnosis apparatus 5 and the sliding-surface diagnosis method of the present embodiment, the condition of the sliding surfaces 100 and 110 can be diagnosed with high accuracy without depending on an experience of an operator.

### (Other embodiments)

The present invention is not limited to the above-described embodiments, and various modifications can be made without departing from the scope of the present invention as defined in the appended claims.

In the above embodiments, the neural network (first embodiment) and the autoencoder (second embodiment) are employed as specific techniques, respectively, of the machine learning performed by the machine learning section 42, while the machine learning section 42 may employ any other machine learning technique. Examples of other machine learning technique include tree type (e.g., decision tree, regression tree), ensemble learning (e.g., bagging, boosting), neural network type including deep learning (e.g., recurrent neural network, convolutional neural network), clustering type (e.g., hierarchical clustering, non-hierarchical clustering, k-nearest neighbors algorithm, k-means method), multivariate analysis (e.g., principal component analysis, factor analysis, logistic regression), and support vector machine.

The present invention can also be provided in the form of program (machine learning program) 230 for causing the computer 200 shown in FIG. 3 to execute the processes included in the machine learning method according to the above embodiments. The present invention can also be provided in the form of program (sliding-surface diagnosis program) 230 for causing the computer 200 shown in FIG. 3 to execute the processes included in the sliding-surface diagnosis method according to the above embodiments.

### (Inference apparatus, inference method and inference program)

The present invention is not limited to the aspect of the sliding-surface diagnosis apparatus 5 (sliding-surface diagnosis method or sliding-surface diagnosis program) according to the above-described embodiments, and can also be provided in the form of inference apparatus (inference method or inference program) for use in diagnosing a condition of a sliding surface. In that case, the inference apparatus (inference method or inference program) may include a memory and a processor, and the processor may perform a series of processes. The series of processes includes an input-data acquisition processing (input-data acquisition process) of acquiring input data including data on the motor current value in a predetermined period, data on the contact electric resistance in a predetermined period, and data on the vibration (at least one of AE wave and acceleration) in a predetermined period, and further includes an inference processing (inference process) of inferring diagnostic information of the sliding surface when the input data is acquired in the input-data acquisition processing.

The aspect of the inference apparatus (inference method or inference program) can be applied to various devices more easily than when the sliding-surface diagnosis apparatus 5 is implemented. It is readily understood by a person skilled in the art that the inference method performed by the inference section 51 of the sliding-surface diagnosis apparatus 5 may be applied with use of the learning model 6, which has been learned, generated by the machine-learning apparatus 4 and the machine learning method according to the above embodiments when the inference apparatus (inference method or inference program) infers the condition of the sliding surface.

### Industrial Applicability

The present invention is applicable to a sliding-surface diagnosis apparatus, a machine learning method, and a machine learning program.

## Claims

1. A sliding-surface diagnosis apparatus for diagnosing a condition of sliding surfaces of a fixed-side sliding member and a rotation-side sliding member using a learning model generated by machine learning apparatus for generating a learning model to be used in the sliding-surface diagnosis apparatus,
the machine learning apparatus comprising:
a learning-data memory configured to store one or plural sets of learning data including input data containing at least data on motor current value in a predetermined period supplied to a motor which is a driving source for the rotation-side sliding member, data on contact electric resistance between the fixed-side sliding member and the rotation-side sliding member in the predetermined period, and data on vibration generated in at least one of the fixed-side sliding member and the rotation-side sliding member in the predetermined period;
a machine learning section configured to input the one or plural sets of learning data to the learning model to cause the learning model to learn a correlation between the input data and diagnostic information of the sliding surfaces; and
a learned-model memory configured to store the learning model that has learned by the machine learning section;
**characterized in that**
the sliding-surface diagnosis apparatus is further comprising:
an input-data acquisition section configured to acquire input data containing data on motor current value in a predetermined period supplied to a motor which is a driving source for the rotation-side sliding member, data on contact electric resistance between the fixed-side sliding member and the rotation-side sliding member in the predetermined period, and data on vibration generated in at least one of the fixed-side sliding member and the rotation-side sliding member in the predetermined period; and
an inference section configured to input the input data acquired by the input-data acquisition section into the learning model and infer diagnostic information of the sliding surfaces.

2. The sliding-surface diagnosis apparatus according to claim 1, wherein the learning data further includes output data containing the diagnostic information associated with the input data, the diagnostic information indicating that the condition of the sliding surfaces in the predetermined period is one of a plurality of conditions, and
the machine learning section is configured to perform supervised learning to cause the learning model to learn the correlation between the input data and the output data.

3. The sliding-surface diagnosis apparatus according to claim 1, wherein the learning data includes only the input data in the predetermined period when the diagnostic information indicates that the condition of the sliding surfaces is a predetermined condition, and
the machine learning section is configured to perform unsupervised learning to cause the learning model to learn the correlation between the input data and the diagnostic information indicating that the condition of the sliding surfaces is the predetermined condition.

4. The sliding-surface diagnosis apparatus according to any one of claims 1 to 3, wherein the data on vibration contained in the input data includes at least one of data on acoustic emission wave and data on acceleration occurring in a direction perpendicular to the sliding surfaces.

5. The sliding-surface diagnosis apparatus according to any one of claims 1 to 4, wherein the diagnostic information includes at least one of diagnostic information on wear of the sliding surfaces, diagnostic information on burned state of the sliding surfaces, and diagnostic information on contamination of a lubricant for lubricating the sliding surfaces.

6. A machine learning method of causing a learning model to learn for use in a sliding-surface diagnosis apparatus for diagnosing a condition of sliding surfaces of a fixed-side sliding member and a rotation-side sliding member, comprising:
a learning-data storing process of storing one or plural sets of learning data in a learning-data memory, the one or plural sets of leaning data including input data containing at least data on motor current value in a predetermined period supplied to a motor which is a driving source for the rotation-side sliding member, data on contact electric resistance between the fixed-side sliding member and the rotation-side sliding member in the predetermined period, and data on vibration generated in at least one of the fixed-side sliding member and the rotation-side sliding member in the predetermined period;
a machine learning process of inputting the one or plural sets of learning data to the learning model to cause the learning model to learn a correlation between the input data and diagnostic information of the sliding surfaces; and
a learned-model storing process of storing, in a learned-model memory, the learning model that has learned in the machine learning process.

7. A machine learning program comprising instructions which, when the program is executed by a computer, cause the computer to carry out the machine learning method according to claim 6.

## Patentansprüche

1. Gleitflächendiagnosevorrichtung zum Diagnostizieren eines Zustandes von Gleitflächen eines Gleitelementes der festen Seite und eines Gleitelementes der Rotationsseite unter Verwendung eines Lernmodells, das durch eine Maschinenlernvorrichtung erzeugt wurde, um ein Lernmodell zu erzeugen, welches in der Gleitflächendiagnosevorrichtung zu verwenden ist,
wobei die Maschinenlernvorrichtung Folgendes aufweist:
einen Lerndatenspeicher, der zur Speicherung von einem oder mehreren Sätzen von Lerndaten konfiguriert ist, welche Eingabedaten aufweisen, die zumindest Daten bezüglich eines Motorstromwertes in einer vorbestimmten Periode, der zu einem Motor geliefert wird, der eine Antriebsquelle für das Gleitelement der Rotationsseite bzw. rotierenden Seite ist, Daten bezüglich eines elektrischen Kontaktwiderstandes zwischen dem Gleitelement der festen Seite und dem Gleitelement der rotierenden Seite in der vorbestimmten Periode, und Daten bezüglich Vibrationen enthalten, die in mindestens einem des Gleitelementes der festen Seite und des Gleitelementes der rotierenden Seite in der vorbestimmte Periode erzeugt werden;
einen Maschinenlernabschnitt, der konfiguriert ist, um den einen oder die mehreren Sätze von Lerndaten in das Lernmodell einzugeben, um das Lernmodell zu veranlassen, eine Korrelation zwischen den Eingabedaten und der Diagnoseinformation der Gleitflächen zu lernen; und
einen Speicher für das gelernte Modell, der konfiguriert ist, um das gelernte Modell zu speichern, welches von dem Maschinenlernabschnitt erlernt worden ist;
**dadurch gekennzeichnet, dass**
die Gleitflächendiagnosevorrichtung weiter Folgendes aufweist:
einen Eingabedatenerfassungsabschnitt, der zur Erfassung von Eingabedaten konfiguriert ist, welche Daten bezüglich eines Motorstromwertes in einer vorbestimmten Periode enthalten, der zu einem Motor geliefert wird, der eine Antriebsquelle für das Gleitelement der rotierenden Seite ist, weiter Daten bezüglich eines elektrischen Kontaktwiderstandes zwischen dem Gleitelement der festen Seite und dem Gleitelement der rotierenden Seite in der vorbestimmten Periode und Daten bezüglich Vibrationen, die in mindestens einem des Gleitelementes der festen Seite und des Gleitelementes der rotierenden Seite in der vorbestimmten Periode erzeugt werden; und
einen Herleitungs- bzw. Inferenzabschnitt, der konfiguriert ist, um die Eingabedaten, die von dem Eingabedatenerfassungsabschnitt erfasst wurden, in das Lernmodell einzugeben, und Diagnoseinformation bezüglich der Gleitflächen zu inferieren bzw. herzuleiten.

2. Gleitflächendiagnosevorrichtung nach Anspruch 1, wobei die Lerndaten weiter Ausgabedaten aufweisen, welche die Diagnoseinformation enthalten, die mit den Eingabedaten assoziiert ist, wobei die Diagnoseinformation anzeigt, dass der Zustand der Gleitflächen in der vorbestimmten Periode einer von einer Vielzahl von Zuständen ist, und
wobei der Maschinenlernabschnitt konfiguriert ist, um überwachtes Lernen auszuführen, um zu bewirken, dass das Lernmodell die Korrelation zwischen den Eingabedaten und den Ausgabedaten erlernt.

3. Gleitflächendiagnosevorrichtung nach Anspruch 1, wobei die Lerndaten nur die Eingabedaten in der vorbestimmten Periode aufweisen, wenn die Diagnoseinformation anzeigt, dass der Zustand der Gleitflächen ein vorbestimmter Zustand ist, und
wobei der Maschinenlernabschnitt konfiguriert ist, um nicht überwachtes Lernen auszuführen, um zu bewirken, dass das Lernmodell die Korrelation zwischen den Eingabedaten und der Diagnoseinformation lernt, die anzeigt, dass der Zustand der Gleitflächen der vorbestimmte Zustand ist.

4. Gleitflächendiagnosevorrichtung nach einem der Ansprüche 1 bis 3, wobei die Daten bezüglich Vibration, die in den Eingabedaten enthalten sind, mindestens eines von Daten bezüglich akustischer Emissionswellen und Daten bezüglich einer Beschleunigung aufweisen, die in einer Richtung senkrecht zu den Gleitflächen auftritt.

5. Gleitflächendiagnosevorrichtungen nach einem der Ansprüche 1 bis 4, wobei die Diagnoseinformation zumindest eines von Diagnoseinformationen bezüglich Abnutzung der Gleitflächen, Diagnoseinformationen bezüglich eines verbrannten Zustandes der Gleitflächen und Diagnoseinformation bezüglich einer Verunreinigung eines Schmiermittels zum Schmieren der Gleitflächen aufweisen.

6. Maschinenlernverfahren, um ein Lernmodell zur Anwendung in einer Gleitflächendiagnosevorrichtung zum diagnostizieren eines Zustandes von Gleitflächen eines Gleitelementes einer festen Seite und eines Gleitelementes einer rotierenden Seite zum Lernen zu veranlassen, wobei es Folgendes aufweist:
einen Prozess des Speicherns von Lerndaten, bei dem einer oder eine Vielzahl von Sätzen von Lerndaten in einem Lerndatenspeicher gespeichert werden, wobei der eine oder die Vielzahl von Lerndaten Eingabedaten aufweisen, die zumindest Daten bezüglich eines Motorstromwertes in einer vorbestimmten Periode enthalten, der zu einem Motor geliefert wird, der eine Antriebsquelle für das Gleitelement der rotierenden Seite ist, Daten bezüglich eines elektrischen Kontaktwiderstandes zwischen dem Gleitelement der festen Seite und dem Gleitelement der rotierenden Seite in der vorbestimmten Periode und Daten bezüglich Vibrationen, die in mindestens einem des Gleitelementes der festen Seite und des Gleitelementes der rotierenden Seite in der vorbestimmten Periode erzeugt werden;
einen Maschinenlernprozess des Eingebens des einen oder der mehreren Sätze von Lerndaten in das Lernmodell, um das Lernmodell zu veranlassen, eine Korrelation zwischen den Eingabedaten und den Diagnoseinformationen der Gleitflächen zu lernen; und
einen Prozess des Speicherns eines gelernten Modells, bei dem in einem Speicher für das gelernte Modell das gelernte Modell gespeichert wird, welches in dem Maschinenlernprozess erlernt wurde.

7. Maschinenlernprogramm, welches Anweisungen aufweist, die, wenn das Programm durch einen Computer ausgeführt wird, den Computer veranlassen, das Maschinenlernverfahren nach Anspruch 6 auszuführen.

## Revendications

1. Appareil de diagnostic de surfaces de glissement destiné à diagnostiquer l'état de surfaces de glissement d'un élément coulissant à face fixe et d'un élément coulissant à face rotative, en utilisant un modèle d'apprentissage généré par un appareil d'apprentissage automatique destiné à générer un modèle d'apprentissage à utiliser dans l'appareil de diagnostic de surfaces de glissement,
l'appareil d'apprentissage automatique comprenant :
une mémoire de données d'apprentissage configurée pour stocker un ou plusieurs ensembles de données d'apprentissage comportant des données d'entrée contenant au moins des données sur la valeur du courant d'un moteur pendant une période prédéterminée fournie à un moteur qui est une source d'entraînement pour l'élément coulissant côté rotation, des données sur la résistance électrique de contact entre l'élément coulissant côté fixe et l'élément coulissant côté rotation pendant la période prédéterminée, et des données sur des vibrations générées dans au moins un parmi l'élément coulissant fixe et l'élément coulissant rotatif, pendant la période prédéterminée ;
une section d'apprentissage automatique configurée pour fournir en entrée les un ou plusieurs ensembles de données d'apprentissage au modèle d'apprentissage pour amener le modèle d'apprentissage à apprendre une corrélation entre les données d'entrée et des informations de diagnostic des surfaces de glissement ; et
une mémoire de modèle appris configurée pour stocker le modèle d'apprentissage qui a été appris par la section d'apprentissage automatique ;
**caractérisé en ce que**
l'appareil de diagnostic de surfaces de glissement comprend en outre :
une section d'acquisition de données d'entrée configurée pour acquérir des données d'entrée contenant des données sur la valeur du courant du moteur pendant une période prédéterminée, fourni à un moteur qui est une source d'entraînement pour l'élément coulissant côté rotation, des données sur la résistance électrique de contact entre l'élément coulissant côté fixe et l'élément coulissant côté rotation pendant la période prédéterminée, et des données sur des vibrations générées dans au moins un parmi l'élément coulissant fixe et l'élément coulissant rotatif, pendant la période prédéterminée ; et
une section d'inférence configurée pour fournir en entrée les données d'entrée acquises par la section d'acquisition de données d'entrée au modèle d'apprentissage et déduire des informations de diagnostic des surfaces de glissement.

2. Appareil de diagnostic de surfaces de glissement selon la revendication 1, dans lequel les données d'apprentissage comportent en outre des données de sortie contenant les informations de diagnostic associées aux données d'entrée, les informations de diagnostic indiquant que l'état des surfaces de glissement dans la période prédéterminée est un parmi une pluralité d'états, et
la section d'apprentissage automatique est configurée pour effectuer un apprentissage supervisé afin d'amener le modèle d'apprentissage à apprendre la corrélation entre les données d'entrée et les données de sortie.

3. Appareil de diagnostic de surfaces de glissement selon la revendication 1, dans lequel les données d'apprentissage comportent uniquement les données d'entrée de la période prédéterminée lorsque les informations de diagnostic indiquent que l'état des surfaces de glissement est un état prédéterminé, et
la section d'apprentissage automatique est configurée pour effectuer un apprentissage non supervisé pour amener le modèle d'apprentissage à apprendre la corrélation entre les données d'entrée et les informations de diagnostic indiquant que l'état des surfaces de glissement est l'état prédéterminé.

4. Appareil de diagnostic de surfaces de glissement selon l'une quelconque des revendications 1 à 3, dans lequel les données sur les vibrations contenues dans les données d'entrée comportent au moins des données sur l'onde d'émission acoustique et des données sur l'accélération se produisant dans une direction perpendiculaire aux surfaces de glissement.

5. Appareil de diagnostic de surfaces de glissement selon l'une quelconque des revendications 1 à 4, dans lequel les informations de diagnostic comportent au moins une parmi des informations de diagnostic sur l'usure des surfaces de glissement, des informations de diagnostic sur l'état brûlé des surfaces de glissement et des informations de diagnostic sur la contamination d'un lubrifiant pour lubrifier les surfaces de glissement.

6. Procédé d'apprentissage automatique destiné à amener un modèle d'apprentissage à apprendre pour être utilisé dans un appareil de diagnostic de surfaces de glissement destiné à diagnostiquer l'état de surfaces de glissement d'un élément coulissant fixe et d'un élément coulissant rotatif, comprenant :
un processus de stockage de données d'apprentissage de stockage d'un ou de plusieurs ensembles de données d'apprentissage dans une mémoire de données d'apprentissage, les un ou plusieurs ensembles de données d'apprentissage comportant des données d'entrée contenant au moins des données sur la valeur du courant d'un moteur pendant une période prédéterminée fournie à un moteur qui est une source d'entraînement pour l'élément coulissant côté rotation, des données sur la résistance électrique de contact entre l'élément coulissant côté fixe et l'élément coulissant côté rotation pendant la période prédéterminée, et des données sur des vibrations générées dans au moins au moins un parmi l'élément coulissant fixe et l'élément coulissant rotatif, pendant la période prédéterminée ;
un processus d'apprentissage automatique de fourniture en entrée des un ou plusieurs ensembles de données d'apprentissage au modèle d'apprentissage pour amener le modèle d'apprentissage à apprendre une corrélation entre les données d'entrée et des informations de diagnostic des surfaces de glissement ; et
un processus de stockage de modèles appris de stockage, dans une mémoire de modèles appris, du modèle d'apprentissage qui a été appris pendant le processus d'apprentissage automatique.

7. Programme d'apprentissage automatique comprenant des instructions qui, lorsque le programme est exécuté par un ordinateur, amènent l'ordinateur à exécuter le procédé d'apprentissage automatique selon la revendication 6.
